# EUROPEAN PATENT APPLICATION

(11) **EP 2 711 828 A2**
(43) Date of publication of application: **26.03.2014**
(21) Application number: 13185326.9
(22) Date of filing: 20.09.2013
(51) Int. Cl.: G06F 3/0488

(54) **Image processing apparatus and control method thereof**

(30) Priority: 25.09.2012 KR 20120106418
(71) Applicant: Samsung Electronics Co., Ltd, Gyeonggi-do 443-742 (KR)
(72) Inventor: Kim, Han-soo, Gyeonggi-do (KR); Lee, Chang-soo, Seoul (KR); Lee, Sang-hee, Seoul (KR)
(74) Representative: Davies, Robert Ean

(57) **Abstract**

An image processing apparatus and a control method thereof are provided, to move and display an item within an image in response to a user's motion. The image processing apparatus includes: an image processor which processes an image to be displayed; a user input which receives a user's motion; and a controller which displays the image including at least one item and moves the item by a predetermined unit moving distance which corresponds to a moving distance of the motion according to the user's motion, such that the unit moving distance of the item increases as the user's motion becomes farther away from an initial location.

## Description

### BACKGROUND

### Field

Apparatuses and methods consistent with the exemplary embodiments relate to an image processing apparatus and a control method thereof. More particularly, the exemplary embodiments relate to an image processing apparatus and a control method thereof which moves and displays an item within an image according to a user's motion.

### Description of the Related Art

A TV, PC, smart phone, smart pad, etc. moves and displays an item of a graphic user interface (GUI) according to a user's motion (e.g. touch input) that is input directly by a user or is input through a remote controller. In a related art, a moving distance of a user's motion is mapped to a moving distance of an item of a graphic user interface (GUI) or its focus or highlight, at a consistent rate. Thus, in response to a user intending to move the item, etc., to a distant place as desired, he/she should perform a large motion which corresponds to the desired place.

### SUMMARY

Accordingly, one or more exemplary embodiments provide an image processing apparatus and a control method thereof which conveniently and flexibly moves an item.

The foregoing and/or other aspects may be achieved by providing an image processing apparatus including: an image processor which processes an image to be displayed; a user input which receives a user's motion; and a controller which displays the image including at least one item and moves the item by a predetermined unit moving distance which corresponds to a moving distance of the motion, according to the user's motion, such that a unit moving distance of the item increases as the user's motion becomes further from an initial location.

The user's motion may include a touch input.

The user input may include a remote control signal receiver which receives a remote control signal which includes information related to a user's touch input from a remote controller.

The image processing apparatus may further include a display which displays the image thereon.

The image processing apparatus may further include a touch screen which includes a display which displays the image thereon and the user input which receives the user's touch input.

The unit moving distance of the item may increase step by step as the user's motion becomes further from the initial location.

In response to a user's first motion being followed by a discontinuous second motion, the controller may determine that the second motion is moved from the initial location.

The movement of the item may include a movement of a focus or a highlight of the item.

The unit moving distance may include the number of movements of the focus or highlights of the item.

The foregoing and/or other aspects may be achieved by providing a method of controlling an image processing apparatus including: displaying an image including at least one item; receiving a user's motion; and moving the item by a predetermined unit moving distance which corresponds to a moving distance of the motion according to the user's motion, such that the unit moving distance of the item increases as the user's motion becomes further from an initial location.

The user's motion may include a touch input.

The receiving of the user's motion may include receiving from a remote controller a remote control signal which includes information related to the user's touch input.

The unit moving distance of the item may increase step by step as the user's motion becomes further from the initial location.

The moving of the item may include a determination determining that a discontinuous second motion is moved from the initial location in response to the user's first motion being followed by the discontinuous second motion.

The movement of the item may include a movement of a focus or a highlight of the item.

The unit moving distance may include the number of movements of the focus or highlight of the item.

An exemplary embodiment may provide an image processing apparatus including: an image processor which processes an image; a user input which receives a user's motion; and a controller which displays the image which includes at least one item and moves the item by a predetermined unit moving distance, such that the unit moving distance of the item increases as the user's motion becomes further from an initial location. The predetermined unit moving distance may correspond to a moving distance according to the user's motion.

In addition, the user's motion may comprise a touch input.

According to another exemplary embodiment, the unit moving distance may increase step by step as the user's motion becomes further from the initial location.

### BRIEF DESCRIPTION OF THE DRAWINGS

The above and/or other aspects will become apparent and more readily appreciated from the following description of the exemplary embodiments, taken in conjunction with the accompanying drawings, in which:
FIGS. 1 to 3 are block diagrams of an image processing apparatus according to an exemplary embodiment;
FIG. 4 is a flowchart showing a method of controlling the image processing apparatus in FIG. 1;
FIG. 5 illustrates an image including at least one item according to an exemplary embodiment;
FIGS. 6 to 8 illustrate a user's motion and a movement of an item which corresponds to the user's motion, according to an exemplary embodiment;
FIG. 9 illustrates a step by step decrease in a moving distance of the user's motion, according to an exemplary embodiment; and
FIGS. 10 and 11 illustrate a movement of a focus or highlight of the item according to an exemplary embodiment.

### DETAILED DESCRIPTION OF EXEMPLARY EMBODIMENTS

Below, exemplary embodiments will be described in detail with reference to accompanying drawings so as to be easily understood by a person having ordinary knowledge in the art. The exemplary embodiments may be embodied in various forms without being limited to the exemplary embodiments set forth herein. Descriptions of well-known parts are omitted for clarity, and like reference numerals refer to like elements throughout.

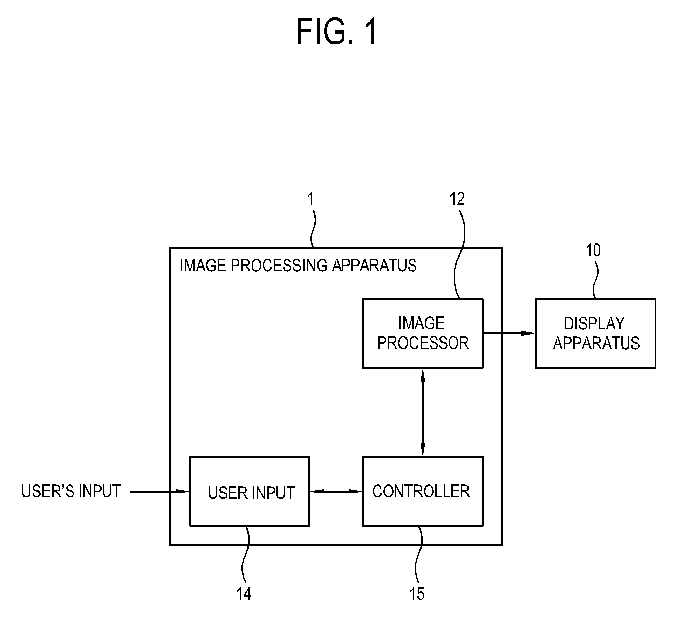

Hereinafter, an embodiment will be described in detail. FIG. 1 is a block diagram of an image processing apparatus according to an exemplary embodiment. The image processing apparatus 1 may include an image processor 12, a user input 14 and a controller 15. The image processing apparatus 1 may be implemented as a TV, a set-top box, a laptop PC, a tablet PC, a smart phone, a smart pad, etc. An exemplary embodiment may apply to any device as long as it moves and displays an item of a graphic user interface (GUI) according to a user's motion, such as a touch input, notwithstanding the name of the device. The movement of the GUI item according to an exemplary embodiment includes a movement of a focus or highlight of the item as well as a movement of the item itself. Hereinafter, the configuration which is expressed as "movement of item" is also applicable to "movement of focus or highlight of item" unless otherwise set forth herein.

The image processor 12 may process a predetermined image signal in order to display an image. The image processor 12 further processes an image including at least one GUI item in order to display the image. The image which is processed by the image processor 12 is output as well, and is displayed by the display apparatus 10, such as a monitor or TV.

The user input 14 receives a user's motion. The user's motion includes a touch input. The user input 14 may directly receive a user's motion or may receive from an external device information related to the user's motion.

The controller 15 displays an image including at least one item, moves the item by a predetermined unit moving distance which corresponds to a moving distance of the motion, according to the received user's motion, and increases the unit moving distance of the item as the user's motion becomes further from an initial location. A detailed operation of the controller 15 will be described later.

The image processing apparatus 1 may further include a storage unit (not shown). The storage may be implemented as a non-volatile memory such as a flash memory, a hard disc drive, etc., which stores therein programs and data necessary for operations of the image processing apparatus 1. Such programs include an operating system (OS), an application program, etc. The controller 15 may include a non-volatile memory (not shown) storing therein a control program which performs the control operation, a volatile memory (not shown) on which at least a part of the stored control program is loaded, and a microprocessor (not shown) which executes the loaded control program. The storage unit may include a non-volatile memory which stores the control program therein.

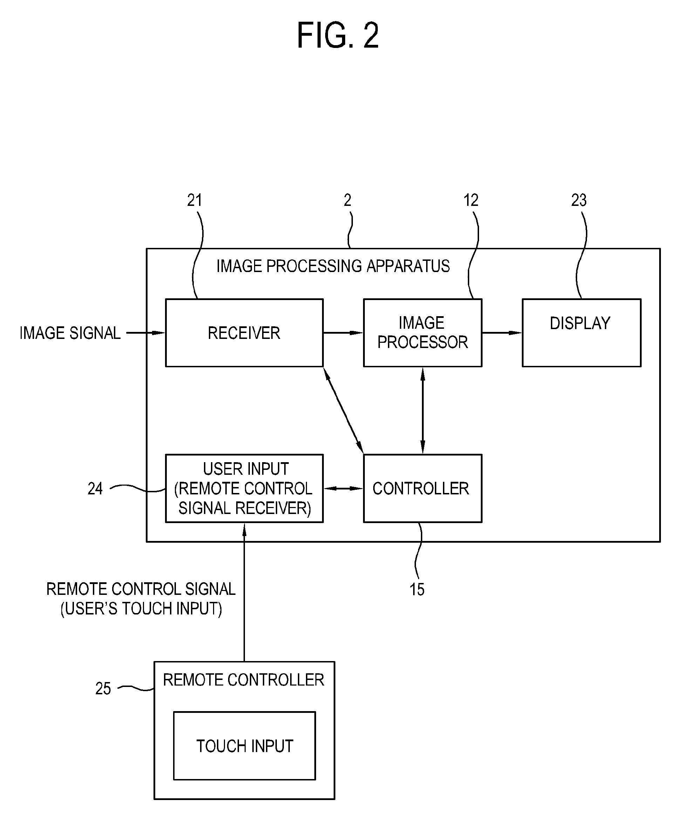

The configuration of the image processing apparatus 1 shown in FIG. 1 is just an exemplary embodiment, and the image processing apparatus according to the exemplary embodiment may vary. FIG. 2 is a block diagram of an image processing apparatus 2 according to an exemplary embodiment. The image processing apparatus 2 may be implemented as a TV, and further includes a receiver 11 and a display 23, compared to the configuration of the image processing apparatus 1 in FIG. 1.

The receiver 21 receives an image signal. The receiver 21 may receive a broadcast signal such as an image signal, from a transmission device (not shown) of a broadcasting signal such as a TV broadcasting signal. The receiver may receive an image signal from an image device such as a DVD player, a BD player, etc.; may receive an image signal from a PC; may receive an image signal from a mobile device such as a smart phone, a smart pad, etc., receive an image signal from a network such as the Internet, and may receive an image content as an image signal stored in a storage medium such as a universal serial bus (USB) storage medium. According to another exemplary embodiment, the image signal may be stored in a storage (not shown) rather than being received through receiver 21.

The display 23 displays an image thereon based on an image signal processed by the image processor 12. The display type of the display 23 includes, but is not limited to, liquid crystal display (LCD), plasma display panel (PDP), and organic light emitting diode (OLED). In this case, the display 23 may include an LCD panel, PDP panel or OLED panel.

The user input 24 of the image processing apparatus 2 may include a remote control signal receiver which receives a remote control signal from a remote controller 25. The remote controller 25 may include a touch input which receives a user's touch input, such as a user's motion. The remote control signal which is transmitted by the remote controller 25 to the remote control signal receiver includes information related to a user's touch input.

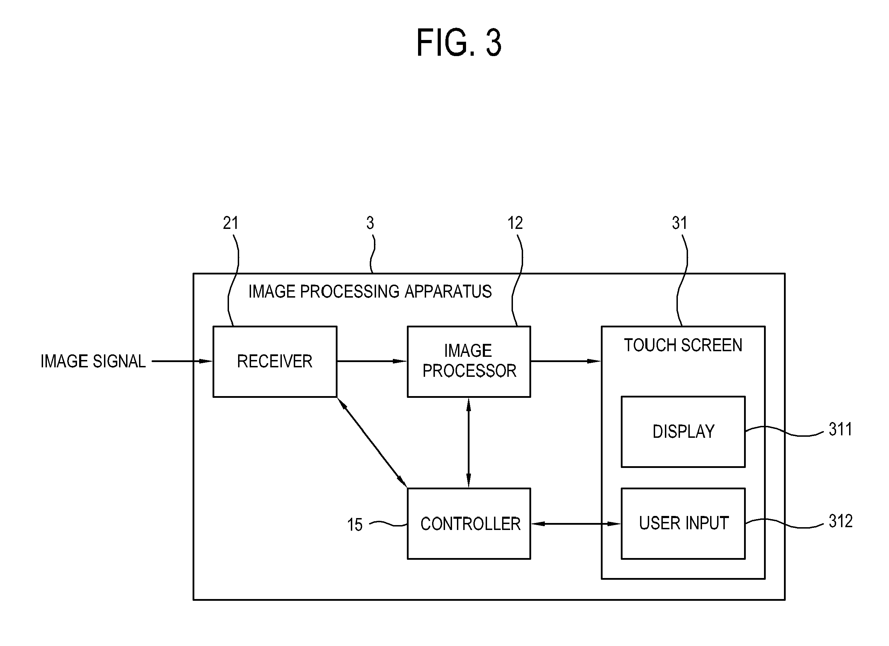

FIG. 3 is a block diagram of an image processing apparatus 3 according to another exemplary embodiment. The image processing apparatus 3 may be implemented as a smart phone, a smart pad, a tablet PC, etc., and its user input 14 is replaced by a touch screen 31 compared to the configuration of the image processing apparatus 1 in FIG. 1. The touch screen 31 may include a display 311 which displays an image thereon, and a user input 312 which receives a user's touch input as a user's motion on the display 311.

The image processing apparatus according to an exemplary embodiment may be implemented as a laptop PC which includes a touch pad to receive a user's touch input as a user's motion. Hereinafter, the image processing apparatus 1 in FIG. 1 will be described as a representative example of the image processing apparatus according to the exemplary embodiment. Unless otherwise set forth herein, the configuration of the image processing apparatus 1 is also applicable to the image processing apparatuses 2 and 3.

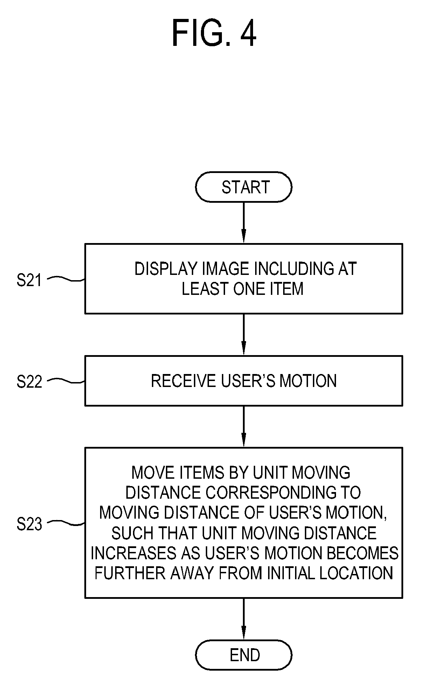

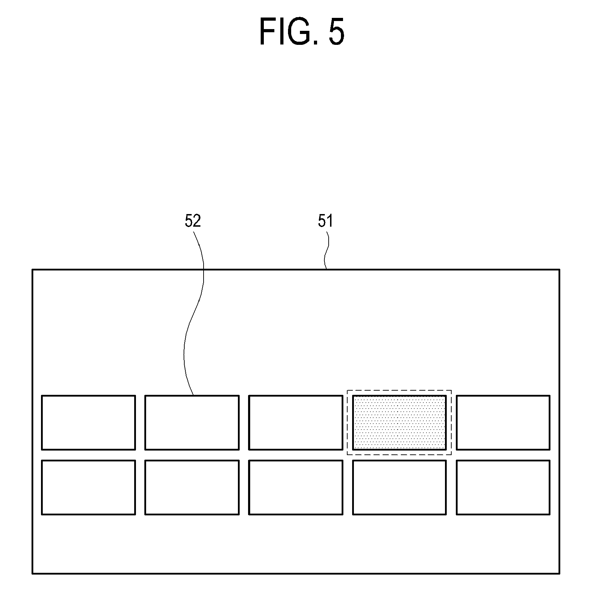

FIG. 4 is a flowchart which shows a control method of the image processing apparatus 1 shown in FIG. 1. At operation S41, the controller 15 of the image processing apparatus 1 displays an image which includes at least one item. FIG. 5 illustrates an image including at least one item according to an exemplary embodiment. As shown therein, an image 51 includes a plurality of items 52 in the form of a GUI. The plurality of items 52 may be selected by a user, and may be highlighted to indicate that it has been selected by a user.

Returning to FIG. 4, at operation S42, the controller 15 receives a user's motion. The motion according to an exemplary embodiment may include a user's touch input. As explained above with reference to FIGS. 1 to 3, the user's touch input may be directly received by the image processing apparatus 1, or may be received through the remote controller 25.

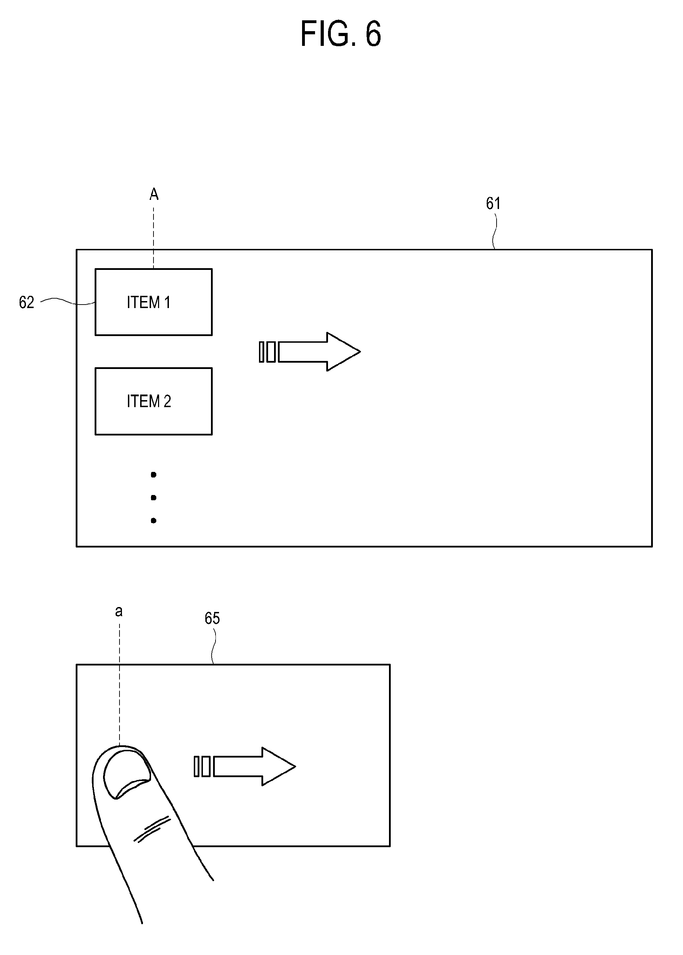

At operation S43, the controller 15 moves the item by a unit moving distance which corresponds to the moving distance of the user's motion, and increases the unit moving distance as the user's motion becomes further from an initial location. For example, referring to FIG. 5, in response to a user's touch input being a movement to the right side, the controller 15 moves the plurality of items 52 to the right side and then displays the moved items 52 which corresponds to the user's touch input. The user's motion and the movement of the item which corresponds to the user's motion according to the exemplary embodiment will be described in more detail with reference to FIGS. 6 to 8.

FIGS. 6 to 8 illustrate a user's motion and a movement of items which correspond to the user's motion according to an exemplary embodiment. Referring to FIG. 6, an image 61 displays a plurality of items 62, and an "item 1" of the plurality of items 62 is displayed on a location "A." A user inputs a user's motion through a touch input 65. As explained above with reference to FIGS. 1 to 3, the touch input 65 is provided in the remote controller 25, but may also be provided in the image processing apparatus 3. A user's finger touches a location "a" on the touch input 65 (hereinafter, to also be called an "initial location"). A user then moves his/her finger to the right side while touching the touch input 65. Then, the controller 15 moves the plurality of items 62 to the right side and then displays the moved items 62 according to the movement of the user's touch input.

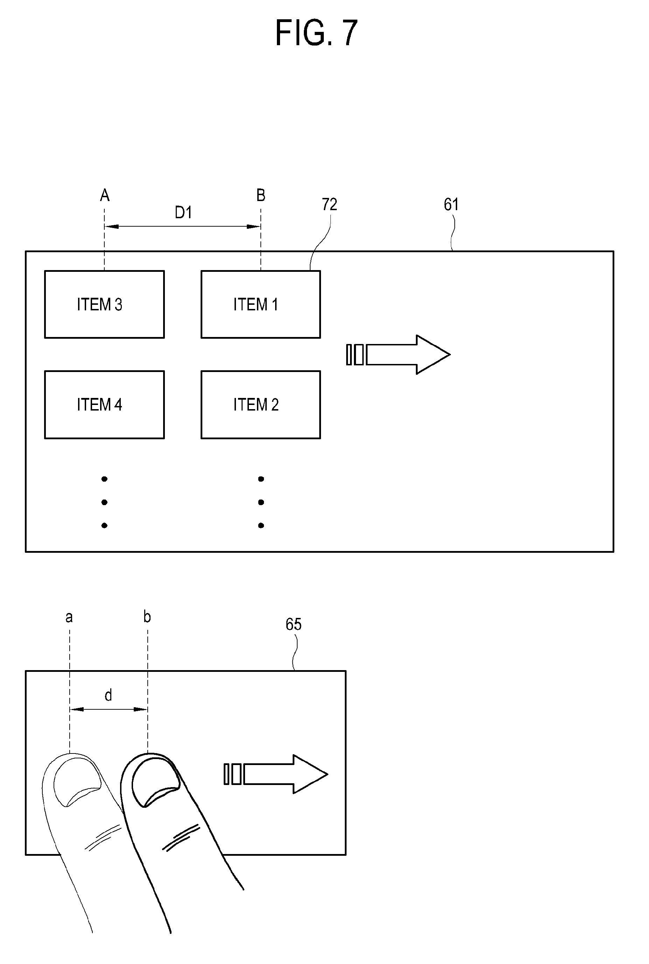

Referring to FIG. 7, the user's touch input indicates a movement from the initial location (a) to a location 'b' which is on the right side of the initial location (a). The "item 1" in the image 61 also indicates the movement from the location "A" to the location "B" which is on the right side of the location "A". The controller 15 moves the plurality of items 62 by a unit moving distance D1 which corresponds to a moving distance d of the user's touch input and then displays the moved items 62 according to the user's touch input.

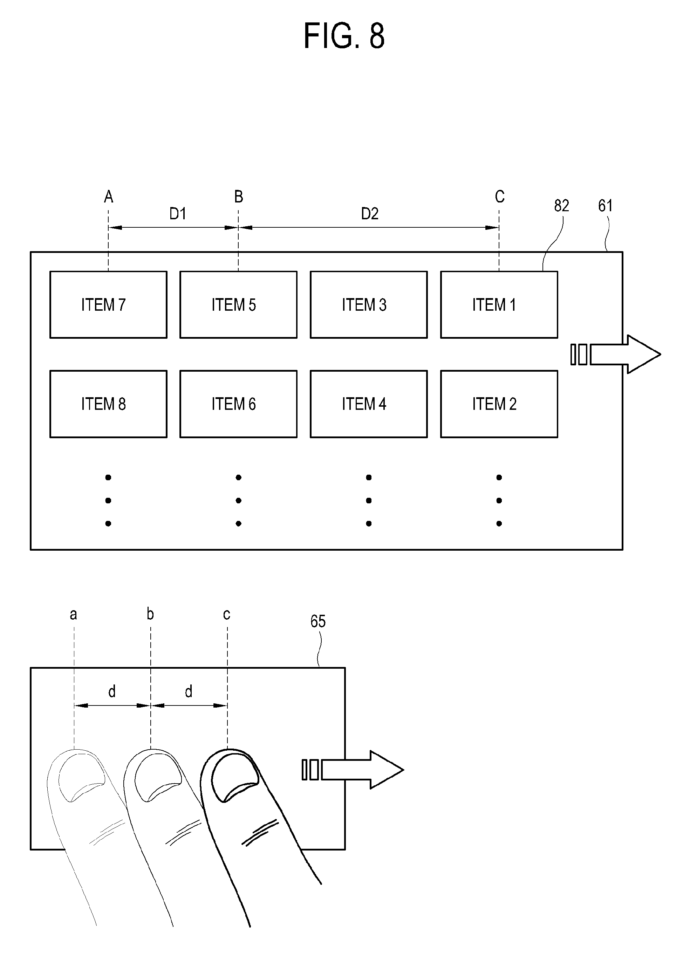

Referring to FIG. 8, a user's touch input indicates a movement from the initial location (a) to a location "c" which is farther right from the initial location (a). The "item 1" in the image 61 also indicates a movement from the location "A" to the location "C" which is farther right from the location "A." The controller 15 increases the unit moving distance which corresponds to the moving distance of the user's touch input, as the user's touch input becomes farther from the initial location a. That is, the controller 15 increases a unit moving distance D2 of the item 62 in the case where the user's touch input is further moved from the location b by the distance d (location "c") so as to be larger than the unit moving distance D1 of the item 62 in the case where the user's touch input is moved from the initial location a by the distance d (location "b").

In response to a user having further moved from the location c by the distance d, the controller 15 moves the plurality of items 62 a longer distance than the unit moving distance D2. According to an exemplary embodiment, a user may manipulate his/her motion to gradually and finely move the plurality of items 62 (motion close to the initial location) and to greatly and promptly move the plurality of items 62 (motion far from the initial location), leading to increased convenience to the user.

The distance of the user's motion from the initial location and the increase in the unit moving distance of the item may be designed in various ways. For example, as the user's motion becomes farther from the initial location, the unit moving distance of the item may be linearly or exponentially increased.

According to an exemplary embodiment, the unit moving distance of the item according to the movement of the user's motion may increase step by step. That is, there may be a plurality of areas which relate the moving distance of the user's motion, and the unit moving distance of the item which corresponds to one area may be consistent within such area.

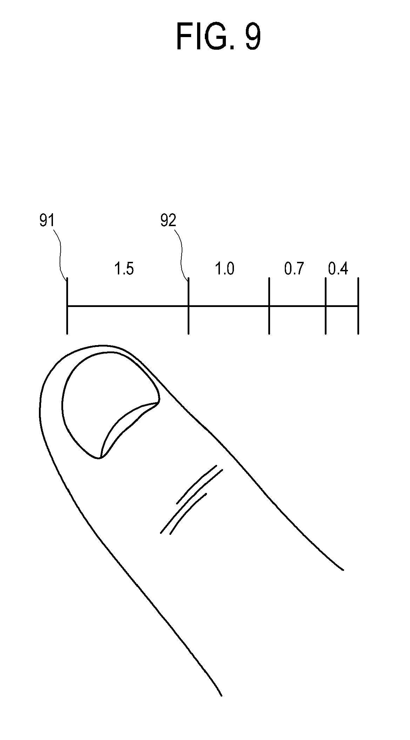

According to an exemplary embodiment, the moving distance of the motion may decrease step by step as the user's motion becomes farther from the initial location. FIG. 9 illustrates an example of a step by step decrease in the moving distance of the item. Referring to FIG. 9, the controller 15 may allow the user's motion to move by the distance equivalent to 1.5 from an initial location 91 and further by the distance equivalent to 1.0, .7, .4, etc., from an initial location 92 to move the item by "X" as the unit moving distance.

In response to there being is a discontinuous second motion after a user's first motion, the controller 15 may determine that the second motion has been moved from the initial location. For example, in response to a user starting a touch input (first motion), suspends the touch after moving to a predetermined distance (the user removing his/her finger from the touch input), and resumes the touch input (second motion), the location where the latter touch input (second motion) is started becomes the initial location.

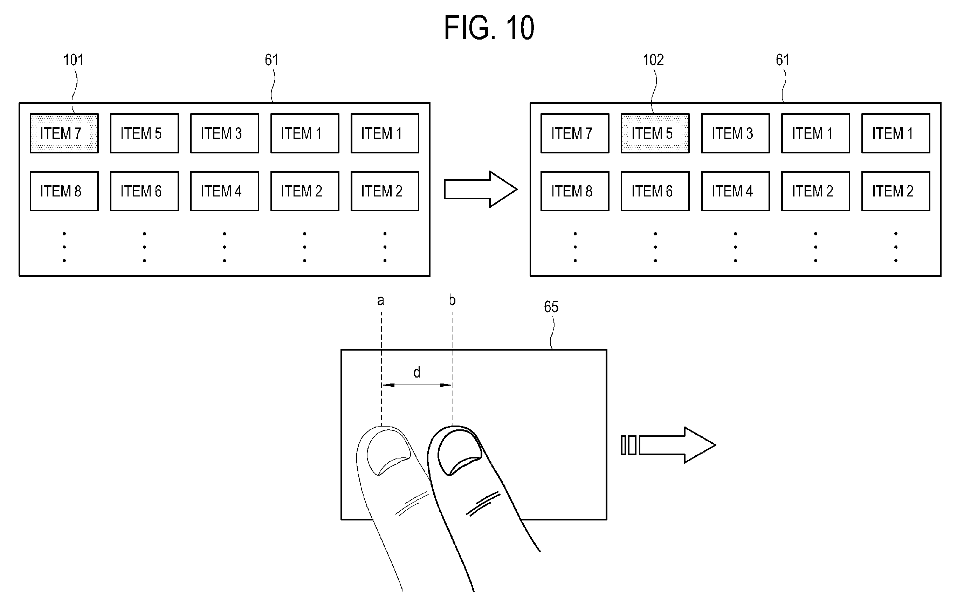

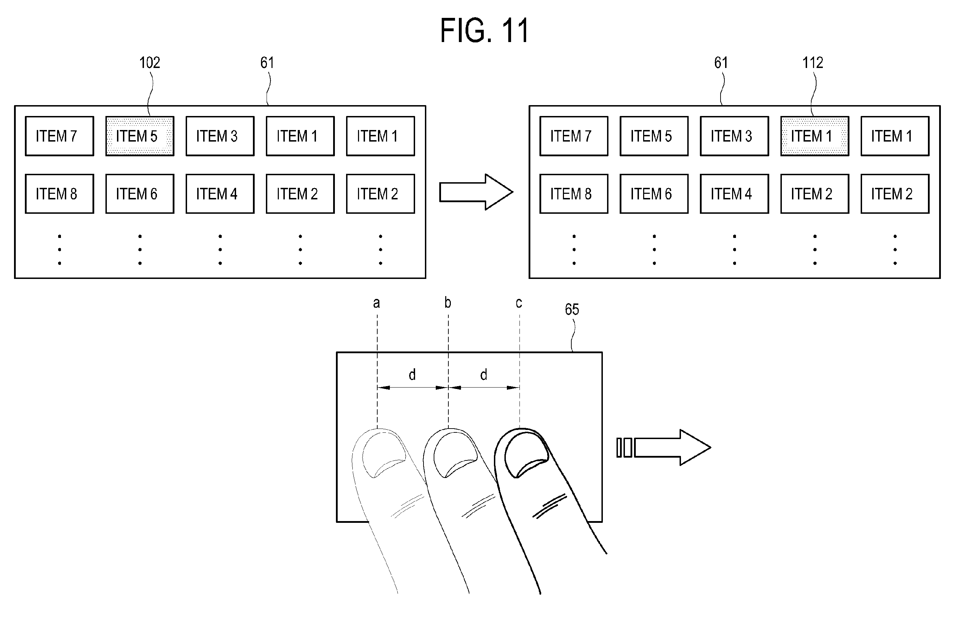

The movement of the item according to an exemplary embodiment includes a movement of a focus or highlight of the item as well as the movement of the item itself. FIGS. 10 and 11 illustrate movement of a focus or highlight of the item according to an exemplary embodiment. The controller 15 may move the focus or highlight of the item by the moving distance which corresponds to the moving distance of the touch input according to the user's touch input. For example, as shown in FIG. 10, in response to a user's touch input being moved from the initial location a to the location b by the distance d, the controller 15 may move a focus or highlight 101 of an 'item 7' to an 'item 5' 102 as the corresponding moving distance.

Referring to FIG. 11, in response to a user's touch input being moved from the initial location a to a location 'c' by the distance d, the controller 15 may move the focus or highlight 102 of an 'item 5' to 'an item 1' 112 as the increased unit moving distance.

According to the exemplary embodiment, the unit moving distance may include the number of unit movements of focus or highlight of the item. That is, the unit moving distance of the focus or highlight of the item may employ mm, cm, etc. as a length or the number of pixels or simply the number of items. For example, in FIG. 10, one item or one space may be moved as the increased number of unit movement.

As described, according to the exemplary embodiment, items may be moved more conveniently and flexibly. That is, a user may manipulate the movement of the item to slightly and finely move the items and greatly and promptly move the items, providing more convenience to the user.

Although a few exemplary embodiments have been shown and described, it will be appreciated by those skilled in the art that changes may be made in these exemplary embodiments without departing from the principles and spirit of the invention, the range of which is defined in the appended claims and their equivalents.

## Claims

1. An image processing apparatus comprising:
an image processor which processes an image to be displayed;
a user input unit which receives a user's motion; and
a controller which displays the image comprising at least one item and moves the item by a predetermined unit moving distance corresponding to a moving distance of the motion according to the user's motion, such that the unit moving distance of the item increases as the user's motion becomes farther away from an initial location.

2. The image processing apparatus according to claim 1, wherein the user's motion comprises a touch input.

3. The image processing apparatus according to claim 2, wherein the user input unit comprises a remote control signal receiver which receives from a remote controller a remote control signal comprising information related to a user's touch input.

4. The image processing apparatus according to one of claims 1 to 3, further comprising a display unit which displays the image thereon.

5. The image processing apparatus according to claim 2, further comprising a touch screen which comprises a display unit displaying the image thereon and the user input unit receiving the user's touch input.

6. The image processing apparatus according to one of claims 1 to 5, wherein the unit moving distance of the item increases step by step as the user's motion becomes farther away from the initial location.

7. The image processing apparatus according to one of claims 1 to 6, wherein if a user's first motion is followed by a discontinuous second motion, the controller determines that the second motion is moved from the initial location.

8. The image processing apparatus according to one of claims 1 to 7, wherein the movement of the item comprises a movement of a focus or highlight of the item.

9. The image processing apparatus according to claim 8, wherein the unit moving distance comprises the number of movements of the focus or highlight of the item.

10. A control method of an image processing apparatus comprising:
displaying an image comprising at least one item;
receiving a user's motion; and
moving the item by a predetermined unit moving distance corresponding to a moving distance of the motion according to the user's motion such that the unit moving distance of the item increases as the user's motion becomes farther away from an initial location.

11. The control method according to claim 10, wherein the user's motion comprises a touch input.

12. The control method according to claim 10 or 11, wherein the unit moving distance of the item increases step by step as the user's motion becomes farther away from the initial location.

13. The control method according to one of claims 10 to 12, wherein the moving the item comprises determining that a discontinuous second motion is moved from the initial location if the user's first motion is followed by the discontinuous second motion.

14. The control method according to one of claims 10 to 13, wherein the movement of the item comprises a movement of a focus or highlight of the item.

15. The control method according to claim 14, wherein the unit moving distance comprises the number of movements of the focus or highlight of the item.
